# EUROPEAN PATENT SPECIFICATION

(11) **EP 1 963 013 B1**
(45) Date of publication and mention of the grant of the patent: **17.03.2010**
(21) Application number: 06828302.7
(22) Date of filing: 12.12.2006
(51) Int. Cl.: B01J 37/025, H01M 4/88, C25B 9/00, B01J 23/38, B01J 23/75, B01D 71/36, B01D 69/14, B01D 67/00, B01D 71/32

(54) **FABRICATION METHODS FOR CATALYST COATED MEMBRANES**
HERSTELLUNGSVERFAHREN FÜR KATALYSATORBESCHICHTETE MEMBRANEN
PROCEDES DE FABRICATION DE MEMBRANES REVETUES D'UN CATALYSEUR

(30) Priority: 12.12.2005 CN 200510130101
(43) Date of publication of application: 03.09.2008
(73) Proprietor: Byd Company Limited, Shenzhen, Guangdong 518119 (CN)
(72) Inventor: YANG, Xinsheng, Guangdong 518119 (CN); DONG, Junqing, Guangdong 518119 (CN)
(74) Representative: Hirsch & Associés
(86) International application number: PCT/CN2006/003380
(87) International publication number: WO 2007/068199

(56) References cited:
- CN-A- 1 477 724
- CN-A- 1 492 531
- CN-A- 1 564 353
- CN-A- 1 612 381
- US-A- 1 276 633
- US-A- 5 234 777
- US-A- 5 242 764
- US-A- 5 399 184
- US-A- 6 054 230
- US-A- 6 054 230

## Description

### Field of Invention

This invention relates to fabrication methods for catalyst coated membranes. In particular, it relates to fabrication methods for catalyst coated membranes for fuel cells.

### Background

Fuel cells are electrochemical energy converting devices that convert the chemical energy stored in the fuels of fuel cells, such as hydrogen, alcohols, and oxidizers such as oxygen to electricity. These devices have high energy conversion rates and are environmental friendly. Proton exchange membrane fuel cells (PEMFC) have a low operating temperature and a high power density. Therefore, it can be used not only in power stations, but also as mobile power sources in automobiles, submarines, and, power sources in military and civilian dual-use applications.

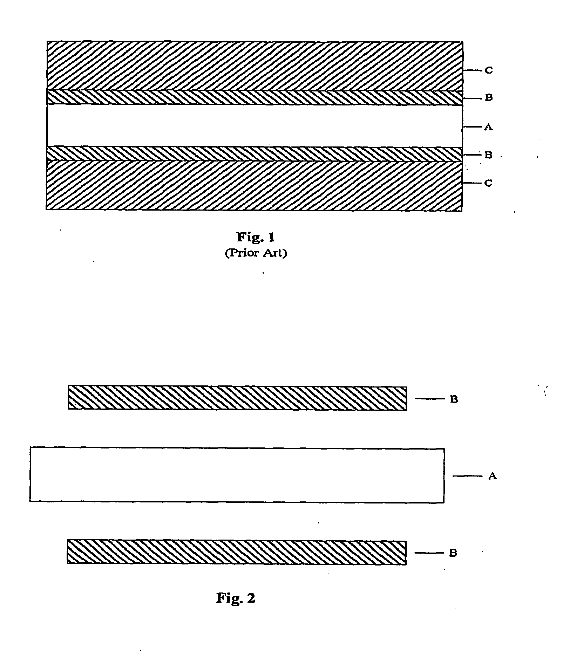

The Membrane Electrode Assembly (MEA) is the core component of fuel cells where electrochemical reaction between the fuels and the oxidizers occur to generates electricity. Generally, a MEA substantially comprising only of catalyst layers and a proton exchange membrane is referred to as 3-layer MEA or a catalyst coated membrane (CCM). MEAs comprising of gas diffusion layers, catalyst layers, and a membrane is called 5-layer MEA. Figure 1 illustrates a five-layer MEA with a proton exchange membrane (A) sandwiched between catalyst layers (B) that is in turn sandwiched between gas diffusion layers (C).

The proton exchange membrane (PEM) transports protons and separates reactive gases is the crucial component in MEAs. Currently, the most commonly used PEMs are perfluorosulfonic acid polymer membranes sold under the trade name Nafion by DuPont in the United States. Due to its unique perfluorinated structure, Nafion membranes are chemically stable, a factor essential for long fuel cell battery life. However, under the operating conditions of fuel cells, Nafion membranes can deform as they expand during moisture absorption and shrinkage during moisture loss. In addition, once the Nafion membrane absorbs water, the strength of the wet membranes reduces significantly. Since fuel cell batteries usually operate at high humidity, these negative effects can significantly affect the lifespan of Nafion membranes.

In order to improve performance, composite materials have been developed to reduce the deformation of Nafion membranes. For example, CN Patent 1178482 provided a composite membrane with increased stability. This composite membrane is an expanded polytetrafluoroethylene (ePTFE) membrane that is completely filled with ion exchange materials where at least part of the ion exchange materials is a non-ionic polymer.

The MEA also contains a certain quantity of Nafion resins that also can cause the membrane to expand with moisture gain and shrink with moisture loss. This can result in changes in the interface between the catalysts and the Nafion resins, reducing the stability of the electrode.

Many current MEAs with thin PEMs are catalyst coated membranes where the catalyst layers are directly attached to the two surfaces of the PEM. Typically, CCMs only have Nafion resins and catalysts that are hydrophilic. Their hydrophobicity is poor as they do not have hydrophobic materials such as PTFE and may only have a small amount of non-sintered PTFE particles. As a result, the discharge of water from these MEAs presents difficulty. Sufficient water has to accumulate in the electrode catalyst layer before the concentration gradient is large enough for it to diffuse from the MEA. This effect can significantly affect the performance and stability of the MEA.

To overcome this problem, US Patent 6054230 introduced the use of micro-porous ePTFE membranes as the support to the catalyst layer during the fabrication of the catalyst layer. The catalysts/Nation dispersing solution is brushed or coated onto the ePTFE membrane. It penetrates into the pores of PTFE to form a porous composite catalyst layer which is used to form the CCMs.

US 5,242,764 discloses a method for assembling a fuel cell. The catalysts used in the document are provided on one of the side surfaces, and there is no description whatsoever as to how said catalysts are provided.

US 5,399,184 discloses a method for fabricating an electrode assembly for solid polymer electrolyte fuel cells. The catalysts used in the document are applied on a carbon cloth sheet or paper layer, by means of a paste composition which contains both the catalyst material (carbon particles) and a hydrophobic resin (namely polytetrafluoroethylene in example 5, and Nafion resin in example 8).

US 5,234,777 discloses a method for fabricating a solid polymer electrolyte membrane assembly for separating anodic and cathodic backings in a gas reaction fuel cell, comprising the steps of: forming a uniform dispersion consisting essentially of a supported Pt catalyst in a perfluorosulfonate ionomer; forming a thin film of said dispersion to a Pt loading less than about 0.35 mg Pt/cm²; transferring said film to a surface of a solid polymer electrolyte membrane; and providing an exchange membrane between two of the catalyst layers to form a catalyst coated membrane.

However, it is difficult to fabricate these membranes. Existing technologies produce catalyst/Nafion dispersing solutions where the minimum particle size in the solution is 0.4 to 0.6 micrometers. The pore diameter of the porous ePTFE is typically 0.1 to 2 micrometers. , However, the distribution of pore diameter in a membrane is uneven. Therefore, it is difficult to completely fill the pores of a micro-porous ePTFE membrane with the catalysts/Nation dispersion solution as the colloid particles formed by the catalysts and Nafion often clog the upper portion of the ePTFE membrane. Moreover, the bond between the catalysts and the Nafion resins colloids in the catalysts/Nafion dispersing solution is weak. Therefore, during the filling of the micro-porous ePTFE membranes, the Nafion resin colloid and catalysts will separate resulting in the clogging of the bottom portion of the ePTFE membranes with the excessive Nafion resins and the upper portion of the membranes with the catalyst clusters. This uneven distribution of catalysts and Nafion resins in the micro-porous ePTFE membranes causes an inferior electrode structure, is an obstacle to proton transfer, and results in the poor performance and stability of the MEA.

Due to the limitations of the prior art, it is therefore desirable to have novel fabrication methods for catalyst coated membranes that fabricate stable catalyst coated membranes that perform well when used as part of the membrane electrode assembly in a fuel cell.

### Summary of Invention

An object of this invention is to provide methods for the fabrication of catalyst coated membranes that are stable.

Another object of this invention is to provide methods for the fabrication of catalyst coated membranes which perform well when used as part of the membrane electrode assembly in a fuel cell.

Another object of this invention is to provide catalyst layers with membranes that are hydrophobic.

Briefly, this invention relates to fabrication methods for catalyst coated membranes that include the steps of: exposing a micro-porous membrane to a catalyst dispersing solution as described in claim 1, to form a catalyst containing micro-porous membrane; exposing said catalyst containing micro-porous membrane to a resin dispersing solution to form a catalyst layer; and placing a proton exchange membrane between two of said catalyst layers with a laminating process to form the catalyst coated membrane.

An advantage of this invention is that catalyst coated membranes fabricated using the methods of this invention are stable.

Another advantage of this invention is that the catalyst coated membranes fabricated with the methods of this invention perform well when used as part of the membrane electrode assembly in a fuel cell.

Another advantage of this invention is that the catalyst coated membranes fabricated using the methods of this invention are hydrophobic.

### Description of the Drawings

The foregoing and other objects, aspects and advantages of the invention will be better understood from the following detailed description of preferred embodiments of this invention when taken in conjunction with the accompanying drawings in which:

Figure 1 is a cross-sectional view of a five layer membrane electrode assembly.

Figure 2 is the cross-sectional view of a catalyst coated membrane fabricated using the methods of this invention.

### Detailed Description of the Preferred Embodiments.

Presently preferred embodiments provide for the fabrication methods for catalyst coated membranes. These methods comprise of the following steps:
first exposing a micro-porous membrane to a catalyst dispersing solution, as described in claim 1, to form a catalyst containing micro-porous membrane;
second exposing said catalyst containing micro-porous membrane to a resin dispersing solution to form a catalyst layer; and
placing a proton exchange membrane between two of said catalyst layers by a laminating process to form the catalyst coated membrane.

Any micro-porous membrane that is used for catalyst coated membranes can be used for the micro-porous membrane. For example, any types of micro-porous ePTFE membranes can be used. The thickness of said membranes can be 3 micrometers to 20 micrometers, preferably, 5 micrometers to 10 micrometers. The diameter of the pores in said micro-porous membrane can be 0.5 micrometers to 2.0 micrometers, preferably, 1 micrometer to 2 micrometers. The porosity of the micro-porous membrane can be 70% to 95%, preferably, 90% to 95%.

The catalyst dispersing solution is as described in claim 1 where the weight ratio of said one or more catalysts: alcohol: water is 1 : 10 to 500: 0-50; preferably 1 : 20-200 : 1.5-20.

The catalysts that can be used are catalysts that are commonly used for CCMs. They can be catalysts or chemicals with catalytic properties that are used in CCMs such as: nano-metal catalysts or nano-metal particles supported on carbon catalysts. Preferably, they are one or more catalysts or chemicals with catalytic properties selected from the following group: nano-platinum, nano-gold, nano-ruthenium, nano-silver, nano-cobalt, nano-platinium-ruthenium alloys, nano-platinum-cobalt alloy, nano-platinum supported on carbon, nano-gold supported on carbon, nano-ruthenium supported on carbon, nano-silver supported on carbon, nano-cobalt supported on carbon nano-platinium-ruthenium alloys supported on carbon, and nano-platinum-cobalt alloy supported on carbon.

The alcohols in the catalyst dispersing solution can be a combination of one or more of the following: iso-propyl alcohol, ethanol and trimethylene glycol. Ethanol is preferred.

Currently used methods for exposing dispersing solutions for micro-porous membranes can be used to expose the micro-porous membrane to the catalyst dispersing solution. Examples of exposing methods include the coating of the catalyst dispersing solution onto the membrane or immersing the membrane into the catalyst dispersing solution. A preferred method is to conduct the first exposing under a vacuum of 0.01mPa to 0.1 mPa; preferably 0.04 mPa to 0.08 mPa. The definition of vacuum is the absolute value of the difference between the absolute pressure and the atmosphere. (The absolute pressure is less than the atmosphere).

The quantity of catalyst dispersing solution (dispersion) used should result in 0.1 mg/cm² to 10 mg/cm² of catalyst in the catalyst containing micro-porous membrane. Preferred methods of uses a quantity of catalyst dispersing solution that results in 0.2mg/cm² to 2 mg/cm² of catalyst in the catalyst containing micro-porous membrane.

After the first exposing step, the catalyst containing micro-porous membrane can be dried with commonly drying processes such as baking, air-blower drying at 30°C to 150°C. Preferred methods air blow dry said membrane at 40°C to 100°C.

The micro-porous membrane can be supported by a support structure, such as a porous structure or a network structure, selected from the following: PET (Polyethylene terephthalate) felts, polypropylene felts, polyethylene nets, or PET non-woven fabrics.

The resin dispersing solution comprises of one or more resins and one or more solvent. The resins and solvents that can be used are the type of resins and solvents commonly used. For example, the resin could be Nafion resins manufactured by DuPont. The solvent can be an alcohol solution that comprises of a combination of one or more of the following: iso-propyl alcohol, ethanol and trimethylene glycol. Ethanol is the preferred alcohol to be used. The concentration of said resins in said resin dispersing solution can be 0.01 wt.% to 3 wt.%, preferably, 0.02 wt.% to 2.5 wt.%

Currently used methods for dispersing solution to a micro-porous membrane can be used to expose the micro-porous membrane to the resin dispersing solution. Examples of exposing methods include the coating of the resin dispersing on the membrane or immersing the membrane in the resin dispersing solution. Coating is the preferred method. A preferred method is conducting the second exposing under a vacuum of 0.01mPa to 0.1 mPa; preferably 0.04 mPa to 0.08 mPa.

The quantity of resin dispersing solution used should result in 0.03 mg/cm² to 20 mg/cm² of resin in the micro-porous membrane. Preferred methods of uses a quantity of resin dispersing solution that result in 0.2 to 7 mg/cm² of resin in the micro-porous membrane.

After the second exposing step, the catalyst layer micro-porous membrane can be dried with commonly drying process such as baking, air-blower drying at 25°C to 200°C. Preferred methods air blow dry said membrane at 50°C to 150°C.

The catalyst coated membrane may be fabricated with a laminating process by sandwiching the proton exchange membrane between two catalyst layers and press bonding the layers. If there is a support for the micro-porous membrane, this support is removed prior to the placing step/laminating step.

A hot plate press method or dual-roller hot-press method can be used to solidly bond together the catalyst layers and the proton exchange membrane at temperatures 100°C to 200 °C; and pressure of 0.1 mPa to 10 mPa. Preferably, temperature at 120°C to 170°C; and pressure at 0.5 mPa to 6 mPa.

The PEM that are commonly used can be used in the methods of this invention. Examples of commercially available PEM are the Nafion membranes from DuPont, including the Nafion 112 film, Nafion 115 film, Nafion 117 film and Nafion 1035 film. The PTFE/Nafion composite membranes disclosed in CN Patent 1178482A can also be used.

Figure 2 is a cross-sectional view of a CCM that is fabricated using the methods of this invention where the two catalyst layers ((B) are sandwiched between the PEM (A).

The fabrication methods of this invention provide filling process to uniformly fill the catalysts and resin throughout the pores of the micro-porous membranes in the catalyst layers. These micro-porous membranes are hydrophobic and easily discharge water when necessary. Therefore, membrane electrode assemblies with catalyst coated membranes fabricated using the methods of this invention are stable and perform well during fuel cell operation.

The following embodiments further describe this invention.

### Embodiment 1

One method for fabricating a catalyst containing micro-porous membrane includes the following steps:
adding 0.2 g of de-ionized water to moisten 0.1 g of Pt/C catalyst. The catalyst can be Hispec8000, a product of Johnson Matthey;
adding 10 g alcohol to the moistened catalyst;
using ultrasound to treating the resulting mixture for 30 minutes to form the catalyst dispersing solution;
placing a 5 micrometer thick micro-porous ePTFE membrane produced by Shanghai DaGong New Materials Co. LTC, with a usable area of 100 cm², and supported by a PET network on a vacuum table;
under a vacuum pressure of 0.05 mPa, spreading said catalyst dispersing solution on the ePTFE membrane, making sure that the dispersing solution reaches the bottom surface of the membrane;
drying said catalyst containing membrane by placing the ePTFE membrane containing the catalyst dispersing solution into an air-blow drying box at 50°C;
repeating the above-described placing, spreading and drying steps until all the catalyst dispersing solution has been used; and
weighing the dried micro-porous ePTFE membranes to ensure that the quantity of catalyst in the membrane is 0.92 mg/cm².

One method for fabricating a catalyst layer include the following steps:
adding 11.4 g of alcohol to 0.6 g of commercial Nafion dispersing solution with a resin content of 5 wt.%. The Nafion dispersing solution can be DE520, a DuPont product;
using magnetic stirring to mix said solution uniformly;
placing a catalyst containing micro-porous ePTFE membrane such as the catalyst containing micro-porous membrane fabricated using the previous step on a vacuum table;
under a vacuum controlled pressure of 0.05 mPa, spray coating a diluted Nafion dispersing solution on the membrane until all the Nafion dispersing solution has been used;
drying the membrane with said Nafion dispersing solution;
peeling off the support for said membrane to obtain a porous self-supporting catalyst layer; and
weighing the membrane to ensure that the quantity of Nafion resin in the micro-porous ePTFE membranes is 0.3 mg/cm².

The fabrication of the CCM using catalyst layers that is fabricated by the method described above includes the following steps:
cutting the porous self-support catalyst layers into two rectangles;
pasting the rectangles on the on the center portion of the two surfaces of a piece of 30 micrometers thick Nafion 112 membrane (Dupont NR112) such that the Nafion membrane is sandwiched between the two rectangles;
hot-pressing the resulting structure for 2 minutes under a pressure of 5 mPa at 135 °C; and
cooling to produce the fabricated porous composite catalyst coated membrane.

### Embodiment 2

One method for fabricating a catalyst containing micro-porous membrane includes the following steps:
adding 6 g of alcohol to 0.2 g of Pt/C catalyst. The catalyst can be Hispec8000, a product of Johnson Matthey;
using ultrasound to treat the resulting mixture for 30 minutes to form the catalyst dispersing solution;
placing a 5 micrometer thick micro-porous ePTFE membrane produced by Shanghai DaGong New Materials Co. LTC with a useable area of 100 cm² and that is supported by on a vacuum table;
under a vacuum pressure of 0.05 mPa, coating said catalyst dispersing solution onto the ePTFE membrane, making sure that the dispersing solution reaches the bottom surface of the membrane;
drying said catalyst containing membrane by placing the ePTFE membrane containing the catalyst dispersing solution into an air-blow drying box at 80°C;
repeating the above-described placing, coating, and drying steps until all the catalyst dispersing solution has been used; and
weighing the dried micro-porous ePTFE membranes to ensure that the quantity of catalyst in the membrane is 1.10 mg/cm².

One method for fabricating a catalyst layer include the following steps:
adding 120 g alcohol to 16 g commercial Nafion dispersing solution with a resin content at 5 wt.%. The Nafion dispersing solution can be DE520, a DuPont product;
using magnetic stirring to mix said solution uniformly;
placing a catalyst containing micro-porous ePTFE membrane such as the catalyst containing micro-porous membrane fabricated using the previous step on a vacuum table;
under a vacuum controlled pressure of 0.05 mPa, spray coating a diluted Nafion dispersing solution onto the membrane until all the Nafion dispersing solution has been used;
drying the membrane with the Nafion dispersing solution;
peeling off the support for said membrane to obtain a porous self-supporting catalyst layer; and
weighing the membrane to ensure that the quantity of Nafion resin in the micro-porous ePTFE membranes is 0.5 mg/cm².

The fabrication of the CCM using catalyst layers that is fabricated by the method described above includes the following steps:
cutting the porous self-support catalyst layers into two rectangles;
pasting the rectangles on the on the center portion of the two surfaces of a piece of 30 micrometers thick Nafion 112 membrane (Dupont NR 112) such that the Nafion membrane is sandwiched between the two rectangles;
hot-pressing the resulting structure for 2 minutes under a pressure of 5 mPa at 135 °C;
cooling to produce the fabricated porous composite catalyst coated membrane.

## Claims

1. A method for the fabrication of catalyst coated membranes, comprising the steps of:
first exposing a micro-porous membrane to a catalyst dispersing solution to form a catalyst containing micro-porous membrane;
second exposing said catalyst containing micro-porous membrane to a resin dispersing solution to form a catalyst layer; and
placing a proton exchange membrane between two of said catalyst layers to form said catalyst coated membrane,
wherein the catalyst dispersing solution consists of 10 to 500 parts by weight of alcohol and 0 to 50 parts by weight of water per part by weight of catalyst.

2. The method of claim 1 wherein the thickness of said micro-porous membrane is 3 micrometers to 20 micrometers, the diameter of the pores in said micro-porous membrane is 0.5 to 2.0 micrometers, and the porosity of said micro-porous membrane is 70% to 95%.

3. The method of claim 1 wherein said catalyst is selected one or more chemicals with catalytic properties selected from the group consisting of: nano-platinum, nano-gold, nano-ruthenium, nano-silver, nano-cobalt, nano-platinum-ruthenium alloys, nano-platinum-cobalt alloy, nano-platinum supported on carbon, nano-gold supported on carbon, nano-ruthenium supported on carbon, nano-silver supported on carbon, nano-cobalt supported on carbon, nano-platinum-ruthenium alloys supported on carbon, and nano-platinum-cobalt alloy supported on carbon.

4. The method of claim 1 wherein said first exposing step is the coating of said catalyst dispersing solution on said micro-porous membrane.

5. The method of claim 1 wherein said first exposing step is conducted under a vacuum of 0.01 mPa to 0.1 mPa.

6. The method of claim 1 wherein the quantity of catalyst in said catalyst containing micro-porous membrane is 0.1 mg/cm² to 10 mg/cm².

7. The method of claim 1 wherein after said first exposing step, the following step is added:
drying said catalyst containing micro-porous membrane at 30°C to 150°C

8. The method of claim 1 wherein said resin dispersing solution comprising of one or more resins and one or more solvent and the concentration of said resins in said resin dispersing solution is 0.01 wt.% to 3 wt.%.

9. The method of claim 1 wherein said resin dispersing solution comprising of one or more resins and the concentration of resins in said micro-porous membrane is 0.03 mg/cm² to 20 mg/cm².

10. The method of claim 1 wherein said second exposing step is the coating of said resin dispersing solution on said catalyst containing micro-porous membrane under a vacuum of 0.01 mPa to 0.1 mPa.

11. The method of claim 10 wherein after said second exposing step, the following step is added:
drying said catalyst layer at 25°C to 200°C.

12. The method of claim 1 wherein said micro-porous membrane is supported by a support selected from the group consisting of: PET felts, polypropylene felts, polyethylene nets or PET non-woven fabrics and said support is removed prior to said placing step.

13. The method of claim 1 wherein after said placing step, the catalyst coated membrane is either hot-pressed or dual-roller hot-pressed.

## Patentansprüche

1. Verfahren zur Herstellung von mit einem Katalysator beschichteten Membranen, folgende Schritte umfassend:
erstes In-Kontakt-Bringen einer mikroporösen Membran mit einer Katalysatordispergierlösung, um eine katalysatorhaltige mikroporöse Membran zu bilden,
zweites In-Kontakt-Bringen der katalysatorhaltigen mikroporösen Membran mit einer Harzdispergierlösung, um eine Katalysatorschicht zu bilden, und
Anordnen einer Protonenaustauschmembran zwischen zwei der Katalysatorschichten, um die mit einem Katalysator beschichtete Membran zu bilden,
wobei die Katalysatordispergierlösung aus 10 bis 500 Gewichtsanteilen Alkohol und 0 bis 50 Gewichtsanteilen Wasser pro Gewichtsanteil Katalysator besteht.

2. Verfahren nach Anspruch 1, wobei die Dicke der mikroporösen Membran 3 Mikrometer bis 20 Mikrometer beträgt, der Durchmesser der Poren in der mikroporösen Membran 0,5 bis 2,0 Mikrometer beträgt und die Porosität der mikroporösen Membran 70 % bis 95 % beträgt.

3. Verfahren nach Anspruch 1, wobei der Katalysator aus einer oder mehreren Chemikalien mit katalytischen Eigenschaften ausgewählt wird, die aus der Gruppe ausgewählt wird/werden, bestehend aus: Nanoplatin, Nanogold, Nanoruthenium, Nanosilber, Nanokobalt, Platin-Ruthenium-Nanolegierungen, Platin-Kobalt-Nanolegierung, Nanoplatin auf Kohlenstoff, Nanogold auf Kohlenstoff, Nanoruthenium auf Kohlenstoff, Nanosilber auf Kohlenstoff, Nanokobalt auf Kohlenstoff, Platin-Ruthenium-Nanolegierungen auf Kohlenstoff und Platin-Kobalt-Nanolegierung auf Kohlenstoff.

4. Verfahren nach Anspruch 1, wobei der Schritt des ersten In-Kontakt-Bringens das Auftragen der Katalysatordispergierlösung auf die mikroporöse Membran ist.

5. Verfahren nach Anspruch 1, wobei der Schritt des ersten In-Kontakt-Bringens in einem Vakuum unter 0,01 mPa bis 0,1 mPa durchgeführt wird.

6. Verfahren nach Anspruch 1, wobei die Menge des Katalysators in der katalysatorhaltigen mikroporösen Membran 0,1 mg/cm² bis 10 mg/cm² beträgt.

7. Verfahren nach Anspruch 1, wobei nach dem Schritt des ersten In-Kontakt-Bringens der folgende Schritt hinzugefügt wird:
Trocknen der katalysatorhaltigen mikroporösen Membran bei 30°C bis 150°C.

8. Verfahren nach Anspruch 1, wobei die Harzdispergierlösung ein oder mehrere Harze und ein oder mehrere Lösemittel umfasst und die Konzentration der Harze in der Harzdispergierlösung 0,01 Gew.-% bis 3 Gew.-% beträgt.

9. Verfahren nach Anspruch 1, wobei die Harzdispergierlösung ein oder mehrere Harze umfasst und die Konzentration der Harze in der mikroporösen Membran 0,03 mg/cm² bis 20 mg/cm² beträgt.

10. Verfahren nach Anspruch 1, wobei der Schritt des zweiten In-Kontakt-Bringens das Auftragen der Harzdispergierlösung auf die katalysatorhaltige mikroporöse Membran in einem Vakuum unter 0,01 mPa bis 0,1 mPa ist.

11. Verfahren nach Anspruch 10, wobei nach dem Schritt des zweiten In-Kontakt-Bringens der folgende Schritt hinzugefügt wird:
Trocknen der Katalysatorschicht bei 25°C bis 200°C.

12. Verfahren nach Anspruch 1, wobei die mikroporöse Membran von einem Träger getragen wird, der aus der Gruppe ausgewählt wird, bestehend aus: PET-Filzen, Polypropylenfilzen, Polyethylennetzen oder PET-Vliesen, und wobei der Träger vor dem Schritt des Anordnens entfernt wird.

13. Verfahren nach Anspruch 1, wobei nach dem Schritt des Anordnens die mit einem Katalysator beschichtete Membran entweder heißgepresst oder mit Doppelwalze heißgepresst wird.

## Revendications

1. Procédé de fabrication de membranes revêtues d'un catalyseur, comprenant les étapes suivantes :
première exposition d'une membrane microporeuse à une solution de dispersion de catalyseur pour former une membrane microporeuse contenant un catalyseur;
seconde exposition de ladite membrane microporeuse contenant un catalyseur à une solution de dispersion de résine pour former une couche de catalyseur; et
placement d'une membrane échangeuse de protons entre deux desdites couches de catalyseur pour former ladite membrane revêtue d'un catalyseur,
dans lequel la solution de dispersion de catalyseur consiste en 10 à 500 parties en poids d'alcool et 0 à 50 parties en poids d'eau pour une partie en poids de catalyseur.

2. Procédé selon la revendication 1, dans lequel l'épaisseur de ladite membrane microporeuse est de 3 micromètres à 20 micromètres, le diamètre des pores dans ladite membrane microporeuse est de 0,5 à 2,0 micromètres, et la porosité de ladite membrane microporeuse est de 70 % à 95 %.

3. Procédé selon la revendication 1, dans lequel ledit catalyseur est un ou plusieurs produits chimiques sélectionnés ayant des propriétés catalytiques, choisis dans le groupe consistant en : le nano-platine, le nano-or, le nano-ruthénium, le nano-argent, le nano-cobalt, les alliages de nano-platine-ruthénium, l'alliage de nano-platine-cobalt, le nano-platine supporté sur du carbone, le nano-or supporté sur du carbone, le nano-ruthénium supporté sur du carbone, le nano-argent supporté sur du carbone, le nano-cobalt supporté sur du carbone, les alliages de nano-platine-ruthénium supportés sur du carbone et l'alliage de nano-platine-cobalt supporté sur du carbone.

4. Procédé selon la revendication 1, dans lequel ladite première étape d'exposition est le revêtement de ladite solution de dispersion de catalyseur sur ladite membrane microporeuse.

5. Procédé selon la revendication 1, dans lequel ladite première étape d'exposition est conduite sous un vide de 0,01 mPa à 0,1 mPa.

6. Procédé selon la revendication 1, dans lequel la quantité de catalyseur dans ladite membrane microporeuse contenant un catalyseur est de 0,1 mg/cm² à 10 mg/cm²_{.}

7. Procédé selon la revendication 1, dans lequel, après ladite première étape d'exposition, l'étape suivante est ajoutée :
le séchage de ladite membrane microporeuse contenant un catalyseur à 30°C à 150°C.

8. Procédé selon la revendication 1, dans lequel ladite solution de dispersion de résine comprend une ou plusieurs résines et un ou plusieurs solvants et la concentration desdites résines dans ladite solution de dispersion de résine est de 0,01% en poids à 3 % en poids.

9. Procédé selon la revendication 1, dans lequel ladite solution de dispersion de résine comprend une ou plusieurs résines et la concentration de résine dans ladite membrane microporeuse est de 0,03 mg/cm² à 20 mg/cm².

10. Procédé selon la revendication 1, dans lequel ladite seconde étape d'exposition est le revêtement de ladite solution de dispersion de résine sur ladite membrane microporeuse contenant un catalyseur sous un vide de 0,01 mPa à 0,1 mPa.

11. Procédé selon la revendication 10, dans lequel, après ladite seconde étape d'exposition, l'étape suivante est ajoutée :
le séchage de ladite couche de catalyseur à 25°C à 200°C.

12. Procédé selon la revendication 1, dans lequel ladite membrane microporeuse est supportée par un support choisi dans le groupe consistant en : les feutres PET, les feutres de polypropylène, les filets de polyéthylène ou les étoffes non tissées PET et ledit support est retiré avant ladite étape de placement.

13. Procédé selon la revendication 1, dans lequel, après ladite étape de placement, la membrane revêtue d'un catalyseur est soit pressée à chaud, soit pressée à chaud par doubles rouleaux.
